# EUROPÄISCHE PATENTSCHRIFT

(11) **EP 3 265 048 B1**
(45) Veröffentlichungstag und Bekanntmachung des Hinweises auf die Patenterteilung: **23.06.2021**
(21) Anmeldenummer: 16708999.4
(22) Anmeldetag: 07.03.2016
(51) Int. Cl.: B29C 64/106, B33Y 10/00, B33Y 40/00, B33Y 70/00, B33Y 80/00, B29C 64/112, B29C 64/259

(54) **KARTUSCHE MIT KOMPOSITMATERIAL**
CARTRIDGE WITH COMPOSITE MATERIAL
CARTOUCHE AVEC UN MATÉRIAU COMPOSITE

(30) Priorität: 06.03.2015 EP 15158023
(43) Veröffentlichungstag der Anmeldung: 10.01.2018
(60) Teilanmeldung: 20192059.2
(73) Patentinhaber: Coltène/Whaledent AG, 9450 Altstaetten (CH); regenHU AG, 1690 Villaz-St-Pierre (CH)
(72) Erfinder: SCHAUFELBERGER, Martin, 8872 Weesen (CH); SUTTER, Simon, 7000 Chur (CH); BARTH, Werner, 8353 Elgg (CH); KUSTER, Michael, 3097 Liebefeld (CH); THURNER, Marc, 2075 Wavre (CH)
(74) Vertreter: Hepp Wenger Ryffel AG
(86) Internationale Anmeldenummer: PCT/EP2016/054750
(87) Internationale Veröffentlichungsnummer: WO 2016/142323

(56) Entgegenhaltungen:
- WO-A1-01/78968
- WO-A1-2005/084581
- WO-A1-2012/070052
- WO-A2-2015/017421
- US-A1- 2002 167 100
- US-A1- 2010 140 850
- US-A1- 2014 167 300

## Beschreibung

Die Erfindung betrifft eine Kartusche für einen 3D-Drucker, ein Stützmaterial für den 3D-Druck von Dentalteilen aus Kompositmaterial, sowie ein Verfahren zum Aushärten von Kompositmaterial und ein Verfahren zur generativen Herstellung von Zahnersatzteilen.

Mit 3D-Druck werden allgemein alle Herstellungsverfahren bezeichnet, welche ein Bauteil durch schichtweises Aneinanderfügen von Materialportionen aufbauen. Es sind heute viel unterschiedliche 3D-Druckverfahren bekannt. Einige Verfahren verwenden Licht oder Laser, um geometrische Strukturen aus einem photosensitiven Harz zu verfestigen. Dazu gehören z.B. die Stereolithographie (STL) oder das Direct Light Processing (DLP).

Die Verwendung von Druckköpfen, wie sie ähnlich im konventionellen Tintenstrahldruck eingesetzt werden, ist bekannt. Dabei werden photosensitive und niedrigviskose Flüssigkeiten als Tröpfchen schichtweise abgelegt und mittels Bestrahlung ausgehärtet. Die Verfahren werden z.B. je nach Equipment des Herstellers als Multi Jet Modelling (MJM) oder Polyjet Printing (PJP) bezeichnet.

In einer Abwandlung davon kann eine photosensitive Flüssigkeit (Tinte, Binder) in ein Pulverbett gespritzt werden, um Pulverpartikel gezielt zu verkleben und schichtweise zu einem Bauteil zu verbinden. Ein Beispiel dafür ist das sogenannte ColorJet Printing (CJP). Entweder ist der Binder selbst eingefärbt oder Binder und Farbpigmente werden mittels unterschiedlicher Düsen abgelegt. In anderen Verfahren wird eine viskose Flüssigkeit als Strang extrudiert und dieser Schichtweise auf eine Bauplattform deponiert. Bei dem eingesetzten Material kann es sich um ein geschmolzenes polymerbasiertes Material handeln oder um eine Paste aus einer Flüssigkeit/Harz-Feststoff Mischung. Die Aushärtung des Bauteils kann bei der Verwendung von Thermoplasten durch Phasenumwandlung (Erstarren) oder bei der Verwendung von Harzsystemen durch Bestrahlung mit Photoinitiatoren erfolgen. Beispiele sind das Fused Deposition Modelling (FDM) oder 3D Plotting.

Die Oberflächenrauhigkeit ist als Folge der Schichtung je nach dem verwendeten Verfahren sehr unterschiedlich. Die meisten Verfahren verlangen eine Nachbehandlung, wie z.B. das Entfernen von Hilfsmaterial/Stützmaterial. Abhängig von der Qualität des Hilfsmaterials kann dieses durch Ausschmelzen, mechanisches Abbrechen oder Strahlen oder durch Lösen in einem Bad erfolgen. Andere mögliche Nachbehandlungen sind bei photosensitiven Harzen eine Nachhärtung mit Licht und/oder Wärme, Harzinfusion zum Schliessen von Stufen, oder Lackieren.

Für dentale Anwendungen werden heute bereits verschieden Verfahren eingesetzt, z.B. SLM für Metallgerüste von herausnehmbaren Prothesen, MJM für Modelle und Bohrschablonen und STL für Provisorien.

Nachteilig an den vorgängig beschriebenen Verfahren ist jedoch, dass es bisher nicht gelungen ist, Zahnersatzteile wie z.B. Brücken, Kronen, Inlays, Onlays, Veneers mit 3D-Druck Verfahren herzustellen, welche die in gängigen Normen geforderten physikalischen, mechanischen und chemischen Eigenschaften erfüllen. Des Weiteren sind auch ästhetische Aspekte damit bislang nicht verwirklicht.

Die gewünschte Ästhetik verlangt zudem häufig den Einsatz von mehreren Farben in einem Bauteil, wodurch die heute bekannten Verfahren mit einem monomeren Ausgangsmaterial ausscheiden. Um die notwendige Festigkeit und Steifigkeit für die Aufnahme von auftretenden Kaukräften, für eine ausreichende Abrasionsbeständigkeit und für eine vernünftige Lebensdauer des Zahnersatzes zu erfüllen, müssen verstärkte Polymere, auch bekannt als Komposite, eingesetzt werden.

EP 1 240 878 B1 beschreibt die Verwendung von Kunststoffmaterial im 3D-Druck von Zahnersatzteilen. Ein vermindertes Verstopfen einer Düse in einer Düsenanordnung wird durch eine Blende erreicht, welche die Düse vor Licht der Aushärtungswellenlänge abschirmt. Des Weiteren ist die Verwendung eines polymerisierbaren Kunststoffes offenbart, welcher eine solche Viskosität aufweist, dass die Verarbeitung des Kunststoffes mit der Düsenanordnung in unpolymerisiertem Zustand erfolgen kann.

EP 1 243 231 B1 offenbart ein Verfahren, in welchem hochviskose bzw. gefüllte Ausgangsmaterialien in 3D-Druckverfahren eingesetzt werden. Die Ablage von Mikrosträngen oder Mikrotropfen ist damit möglich. Die Verstärkungen in Form von Fasern oder Partikeln führen im Allgemeinen dazu, dass solche Komposite eine hohe Viskosität aufweisen. Dies führt jedoch zu vergleichsweise hohen Auspressdrücken der Kartuschen und Düsen und zu einem Verstopfen der Düse durch die Verstärkungen. Ein zuverlässiges und kostengünstiges Drucken von Zahnersatzteilen ist daher mit den im Stand der Technik beschriebenen Verfahren nicht möglich. Das Austauschen des Druckkopfes bzw. der Düse des Druckkopfes bedeutet zudem einen erheblichen Kostenfaktor.

US 2010/140850 A1 offenbart eine Zusammensetzung für SFF (solid freeform fabrication) umfassend eine aushärtbare Komponente mit einer monofunktionalen Methacrylat-Gruppe, einen Photoinitiator und einen schwefelhaltigen Zusatz.

US 2002/167100 A1 offenbart ein Verfahren für die Herstellung von Dentalteilen, welches das Auftragen eines Materials auf eine feste Auflage oder ein flüssiges Medium mit einem schichtweisen 3D-Auftragsverfahren umfasst.

US 2014/167300 A1 offenbart mit Licht aushärtbare Zusammensetzungen für künstliche Zähne und die Basis von Zahnprothesen mit lichtaushärtbaren organischen Komponenten, einem oberflächenmodifizierten anorganischen Füllstoff, einem Photoinitiator, Farbstoff und Stabilisierer.

WO 2005/084581 A1 offenbart eine medizinische 3D-Struktur aus einem biokompatiblen, biologisch abbaubaren Harz und ein Verfahren für die Herstellung. Letzteres umfasst das Füllen einer Spritze mit einem Granulat eines biokompatiblen, biologisch abbaubaren Harzes, Schmelzen des Harzes und Formen von 2D-Lagen durch Ablage durch eine Düse. Mehrere 2D-Lagen bilden eine 3D-Struktur.

WO 01/78968 A1 offenbart eine Vorrichtung und ein Verfahren zum Herstellen von dreidimensionalen Objekten. Die Vorrichtung weist einen Behälter für ein Medium und einen dreidimensional positionierbaren Dispenser zur Abgabe eines Materials in das Medium auf. Die Abgabe des Materials in das Medium führt zur Ausbildung fester Strukturen. Die Abgabe des Materials durch Bewegen des Dispensers in XYZ-Richtung auf eine Plattform unterhalb der Füllhöhe des ersten Materials in dem Behälter führt zur Ausbildung dreidimensionaler Objekte.

WO 2012/070052 A1 offenbart ein Verfahren zur additiven Herstellung eines 3D-Gegenstands. Das Verfahren umfasst das nacheinander Bilden von mehreren Schichten zu einem Muster, welches der Form des zu bildenden Gegenstands entspricht. Die Schichten werden durch Ablegen mindestens eines Modellmaterials gebildet und durch Strahlung ausgehärtet.

WO 2015/017421 A2 offenbart ein Verfahren umfassend Bereitstellen eines Trägermaterials, in welchem eine Struktur hergestellt wird, Ablegen eines Strukturmaterials in das Trägermaterial zum Herstellen der Struktur und Entfernen des Trägermaterials zur Freigabe der hergestellten Struktur.

Es ist daher Aufgabe der Erfindung, die Nachteile des Stands der Technik zu überwinden. Insbesondere ist es Aufgabe der Erfindung, eine Kartusche für einen 3D-Drucker bereitzustellen, welche den 3D-Druck von Zahnersatzteilen ermöglicht und dabei praktische und ästhetische Vorteile realisiert. Weitere Aspekte der Erfindung betreffen das Bereitstellen i) eines Stützmaterials für die Lichtpolymerisation eines Kompositmaterials, ii) eines Verfahrens zur Aushärtung von Kompositmaterial und iii) eines Verfahrens zur generativen Herstellung von Zahnersatzteilen.

Die Erfindung betrifft eine Kartusche für einen 3D-Drucker, wobei die Kartusche eine Düse aufweist oder derart ausgebildet ist, dass eine vordefinierte Düse ausbildbar ist, und wobei die Kartusche ein dentales Kompositmaterial enthält. Das Kopmpositmaterial umfasst eine aushärtbare, insbesondere lichtaushärtbare, Matrix, und nur Füllstoffe mit einer maximalen Partikelgrösse von < 5 µm. Das dentale Kompositmaterial weist im nicht-ausgehärtetem Zustand eine Viskosität im Bereich von 1 - 10'000 Pa*s, bevorzugt von 10 - 2000 Pa*s, besonders bevorzugt 50 - 800 Pa*s auf, insbesondere gemäss Bestimmung der Viskosität im Rheometer wie nachstehend in den Ausführungsbeispielen erläutert.

Auf diese Weise wird ein Verstopfen der Düse beim 3D-Drucken weitestgehend ausgeschlossen, was ein kontinuierliches 3D-Drucken ermöglicht. Ein Pausieren oder Stoppen des Druckprozesses zum Befreien der Düse von Verstopfungen ist somit nicht erforderlich. Die erfindungsgemässe Kartusche ermöglicht ein effizientes und zügiges 3D-Drucken von Zahnersatzteilen. Diese Zahnersatzteile können provisorische oder finale Zahnersatzteile darstellen. Die erfindungsgemässe Kartusche ermöglicht ein kostengünstiges Drucken durch einen Zahnarzt (chair side) innerhalb kurzer Zeit, so dass ein Patient in einer Konsultation komplett versorgt werden kann.

Die Kartusche kann ein Grössenverhältnis des Düsendurchmessers der Kartusche zur grössten Partikelgrösse des Kompositmaterials von 10:1, bevorzugt 30:1, besonders bevorzugt 50:1, aufweisen. Der Düsendurchmesser kann dabei im Bereich von 50 bis 300 µm, bevorzugt 100 bis 250 µm, besonders bevorzugt 150 bis 200 µm, liegen. Durch das entsprechend gewählte Verhältnis aus Düsendurchmesser der Kartusche zur grössten Partikelgrösse des Kompositmaterials wird ein Verstopfen und damit ein Abbrechen bzw. Unterbrechen des 3D-Drucks verhindert.

Die Kartusche kann des Weiteren derart ausgestaltet sein, dass sie eine Menge eines Kompositmaterials enthält, welche im Wesentlichen für eine Anwendung ausreicht (single dose). Dies hat den Vorteil, dass für jeden neuen Bauauftrag und für jede Materialkomponente eine neue und saubere Düse verwendet wird. Auf diese Weise wird die Prozessstabilität verbessert. Es findet keine Materialverschleppung statt. Eine Reinigung nach dem Abschluss des Bauauftrages ist nicht notwendig. Entsprechend sammeln sich keine Kompositmaterialreste an Stellen, welche aufgrund des Umgebungslichts aushärten könnten und den Druckprozess bei einem nächsten Auftrag stören könnten.

Die Füllmenge der Kartusche kann bevorzugt in einem Bereich von 0.5 Gramm bis 4 Gramm liegen, beispielsweise bei 1.5 Gramm. Bei der Herstellung von Zahnersatzteilen mittels 3D-Druck aus mehreren Materialien kann die Menge für die einzelnen Materialien gegebenenfalls entsprechend geringer sein.

Die Kartusche und/oder der Reservoirbereich kann/können aus verschiedenen Materialien hergestellt und auf verschiedene Arten gefertigt werden. Dabei können die Materialien ausgewählt sein aus der Gruppe Metall, Kunststoff und Kombinationen von Metall und Kunststoff.

Bevorzugte Metalle sind rostfreier Stahl, Aluminium, oder Titan. Diese weisen die erforderliche Festigkeit und Steifigkeit auf, reagieren nicht mit dem Kompositmaterial, sind lichtdicht und lassen sich mit fachüblichen Mitteln und Verfahren einfach in die gewünschte geometrische Form bringen.

Die Kartusche kann zusätzlich an den Innenseiten (des Reservoirs/Reservoir-Bereichs), welche in Kontakt mit dem Kompositmaterial stehen, beschichtet sein. Eine derartige Beschichtung kann beispielsweise Kunststoff oder Keramik enthalten oder daraus bestehen. Derart können bestimmte Eigenschaften wie beispielsweise das Gleitverhalten vorteilhaft beeinflusst und eingestellt werden.

Bevorzugte Kunststoffe sind thermoplastische Materialien, insbesondere Polypropylen (PP), Polybutylenterephthalat (PBT), Polyamid (PA), Polyphthalamide (PPA), Polysulfon (PSUP), Polyphenylensulfid (PPS), Polyetheretherketon (PEEK).

Eine Kartusche aus Kunststoff ist kostengünstig in den benötigten Stückzahlen herstellbar. Die Sauerstoffdurchlässigkeit der Kartusche aus Kunststoff wirkt sich positiv auf die Haltbarkeit des Kompositmaterials aus. Die mechanische Stabilität der Kartusche aus Kunststoff ist ausreichend und kann mit Füllstoffen noch weiter optimiert werden. Die Lichtdichtigkeit der Kartusche aus Kunststoff kann durch die Zugabe von Farbpigmenten zum Kunststoff bei der Herstellung der Kartusche erreicht werden.

Eine Kartusche aus einer Kombination von Metall und Kunststoff ist vorteilhaft, weil eine feine und robuste Düse ausgestaltet werden kann. Dazu wird bevorzugt eine zylindrische oder konifizierte Metall-Kanüle als Düse an einer Kunststoffkartusche angebracht. Dies kann beispielsweise durch Umspritzen der Metall-Kanüle oder durch Einsetzen, insbesondere Einpressen, Einzementieren oder Einschweissen, der Metall-Kanüle erfolgen.

Die Kartusche kann weiter einen Kolben zum Verdrängen des Kompositmaterials durch die Düse aus der Kartusche aufweisen. Auf diese Weise kann das Kompositmaterial anforderungsgemäss aus der Kartusche verdrängt und an einer Zielstelle abgelegt werden.

Bevorzugt sind die Geometrien der Kartusche und der Düse derart ausgestaltet, dass ein strömungstechnisch optimierter Materialfluss des Kompositmaterials beim Druckvorgang erzielt wird. Auf diese Weise wird ein hoher Materialfluss bei geringem Auspressdruck erzielt. Die Durchflussrate konnte mit einer konischen Düse um den Faktor 30-50 erhöht werden. Ein typischer Wert für die Durchflussrate mit konischer Düse mit einem Enddurchmesser von 0.160 mm ist 0.05 g/min, bei 5 bar Extrusionsdruck und 23°C.

Besonders bevorzugt ist die Düse über einen weiten Bereich, insbesondere über ihre im Wesentlichen gesamte Länge konisch ausgestaltet; lediglich ein Endbereich vor dem Austritt ist zylindrisch ausgestaltet. Die zylindrische Ausgestaltung im Endbereich dient insbesondere dem Einstellen eines definierten Strangdurchmessers. Erfindungsgemäss hat der zylindrische Endbereich der Düse eine Länge vom 1 bis 30fachen, vorzugsweise vom 3 bis 10fachen des Innen-Düsendurchmessers am Austritt. Aufgrund der feinen Ausgestaltung der Düse kann diese bevorzugt mit einer abziehbaren Kappe versehen sein. Die abziehbare Kappe schützt die Düse gegen Deformationen.

Die Kartusche kann eine Positioniereinrichtung aufweisen, welche eine definierte und reproduzierbare Aufnahme der Kartusche in einem 3D-Drucker gewährleistet. Eine definierte Aufnahme ist insbesondere bei der Verwendung mehrerer Kartuschen unterschiedlichen Inhalts bei der Herstellung eines Zahnersatzteils von Nutzen, um einen unerwünschten Versatz zwischen den Materialien zu vermeiden. Die Positioniereinrichtung kann z.B. durch ein konisches oder kegelstumpfförmiges Zentrierelement gebildet werden, welches um die Düse herum angeordnet ist. Die Positioniereinrichtung kann ferner einen Anschlag zur Gewährleistung einer definierten Position des Düsenauslasses entlang der Düsenlängsachse aufweisen. Ein zur Aufnahme der Kartusche vorgesehener Druckkopf eines 3D-Druckers kann eine zum Positionierelement korrespondierende Gegen-Positioniereinrichtung aufweisen.

Ebenso kann die Kartusche ein Sieb aufweisen, welches vor dem Austritt der Düse angeordnet ist. Wird das Kompositmaterial aus der Kartusche verdrängt, so wird dieses durch das Sieb hindurchgeleitet. Dabei ist das Sieb im Inneren der Kartusche angeordnet, um das Kompositmaterial vor dem Erreichen der Düse zu filtern. Auf diese Weise werden Agglomerate von Füllstoffpartikeln, die sich in der Kartusche gebildet haben können, von der Düse ferngehalten und ein Verstopfen der Düse verhindert. Das Sieb kann eine Porengrösse im Bereich von 5 bis 1000 µm, bevorzugt 10 bis 500 µm, besonders bevorzugt 20 bis 100 µm aufweisen. So kann das System aus Durchmesser der Düsenöffnung, maximaler Partikelgrösse der Füllstoffe und Porengrösse des Siebs derart eingestellt werden, dass ein effizientes 3D-Drucken von Zahnersatzteilen ermöglicht ist.

Des Weiteren kann die Kartusche eine Abdeckung aufweisen, welche allgemein den Inhalt der Kartusche vor der Umgebung schützt. Insbesondere kann mittels einer solchen Abdeckung ein ungewolltes Betätigen des Kolbens zum Verdrängen des Kompositmaterials ausgeschlossen werden.

Die Kartusche kann derart ausgestaltet sein, dass eine Düse durch Anschneiden oder durch Punktieren, insbesondere mittels eines Lasers, ausbildbar ist. Derart wird eine Düse bzw. eine Düsenöffnung mit einer anforderungsgemäss definierten Grösse zur Verfügung gestellt.

Die Kartusche kann weiterhin mindestens ein Dichtelement aufweisen. Dabei ist das Dichtelement derart ausgestaltet, dass die Kartusche gegenüber einem an der Kartusche anordenbaren Presselement zum Verdrängen des Kompositmaterials abdichtbar ist. Ein derartiges Presselement kann zum Einwirken auf den Kolben ausgestaltet sein. Insbesondere kann das Presselement ein mit Pressluft betriebenes, hydraulisches oder ein mechanisches Presselement sein, welches an der Kartusche anordenbar ist. Das Dichtelement kann eine Dichtung in Form eines O-Rings, beispielsweise aus einem deformierbaren Material, sein. Ebenso kann eine Dichtwirkung durch eine Kerbe auf der Kartusche erzielt werden. Hierbei ist das Material des Pressstempels im Vergleich zum Material der Kartusche härter, wodurch eine Kerbe und damit eine Dichtwirkung an der Kartusche erzielt wird. Prinzipiell sind auch umgekehrte Materialeigenschaften denkbar, jedoch weniger bevorzugt.

Das mindestens eine Dichtelement kann an einem äusseren Bereich der Kartusche bevorzugt auf einer oberen Abdeckung angeordnet sein. Alternativ kann es in einem inneren Bereich der Kartusche oberhalb des Presselements, welches an einen Reservoirbereich angrenzt, angeordnet sein. Dabei enthält der Reservoirbereich das Kompositmaterial. Auf diese Weise wird ein effizientes Abdichten des inneren Bereichs der Kartusche gegenüber der Umgebung erreicht und damit ein kontrolliertes Ablegen von Kompositmaterial aus der Kartusche durch die Düse hindurch ermöglicht.

Die Kartusche umfasst eine das Reservoir vollständig umlaufende Wand. Im Betriebszustand kann die Düse bzw. die Düsenöffnung unterhalb der Wand des Reservoirs angeordnet sein. Die umlaufende Wand bildet so eine Aufnahme für den Kolben. Die Wand kann zylindrisch ausgestaltet sein. Alternativ kann die Wand einen Sockel, beispielsweise zur Aufnahme eines Dichtelements, insbesondere eines O-Rings, aufweisen. Prinzipiell kann das Dichtelement auch ohne einen Sockel in einem Innenbereich, beispielsweise in einem im Betriebszustand oberen Bereich der Kartusche oder in einem Bereich der oberen Begrenzung der Kartusche angeordnet sein. Die Wand der Kartusche kann auch zwei funktionell unterschiedliche Bereiche aufweisen. Ein erster Bereich ist dabei zur Aufnahme des Presselements, insbesondere eines Pressluftstutzens, zum Bewegen des Kolbens und zur Aufnahme des Dichtelements ausgestaltet. Der zweite Bereich bildet dabei zumindest teilweise das Reservoir zur Aufnahme des Kompositmaterials und des Kolbens. Auf diese Weise kann im Betriebszustand eine vorteilhafte Dichtwirkung der Kartusche gegenüber der Umgebung erreicht werden.

Die Kartusche und das mindestens eine Dichtelement sind mittels Koextrusion oder mittels Tiefzieh-Verfahren herstellbar. Alternativ kann das mindestens eine Dichtelement auch durch Anspritzen an die vorgefertigte Kartusche hergestellt werden.

Die Kartusche kann derart ausgestaltet sein, dass die Kartusche formschlüssig in oder an einer korrespondierenden Einheit eines 3D-Drucker positionierbar ist. Dies kann vorzugsweise über eine Indexierung in Form einer Aussparung oder eines Vorsprungs erreicht werden, wobei an dem 3D-Drucker eine im Wesentlichen formkomplementäre Aussparung oder Vorsprung vorhanden ist. Derart ist eine Fehlverwendung im Sinne eines Einlegens und Verwendens einer nicht geeigneten Kartusche ausgeschlossen.

Die Kartusche kann eine Wärmeleitfähigkeit von 0.1 bis 400 W/mK, bevorzugt 0.2 bis 250 W/mK, besonders bevorzugt 70 bis 250 W/mk aufweisen. Auf diese Weise kann ein effizienter Wärmeeintrag von einer Heizeinheit auf die Kartusche erfolgen, welche in oder an der zu der Kartusche korrespondierenden Einheit des 3D-Drucker angeordnet ist. Mittels des Wärmeeintrags können die Fliesseigenschaften des Kompositmaterials in der Kartusche optimal bzw. anforderungsgemäss eingestellt werden. Die Verarbeitung des Kompositmaterials sowie optional weiterer Materialien, wie eines Stützmaterials und/oder eines Trennmaterials wie nachfolgend beschrieben bei einer definierten Temperatur, bevorzugt einer mittels Heizeinheit eingestellten definierten Temperatur oberhalb der Umgebungstemperatur, gewährleistet ferner definierte und reproduzierbare Eigenschaften der jeweiligen Materialien.

Ein weiterer Aspekt der Erfindung betrifft ein Stützmaterial für den 3D-Druck von Dentalteilen aus Kompositmaterial wie vorgängig erläutert. Das Stützmaterial kann derart ausgestaltet sein, dass es im Wesentlichen Sauerstoff-undurchlässig und insbesondere biokompatibel ist. Unter biokompatibel wird hier und im Folgenden die Eigenschaft verstanden, dass ein Material keinen negativen Einfluss auf Lebewesen in seiner Umgebung nach ISO 10993 1-20:2009 hat. Auf diese Weise kann das Stützmaterial im 3D-Druck bei der Herstellung von insbesondere medizinischen und zahnmedizinischen Ersatzteilen im 3D-Druck eingesetzt werden. Aufgrund der Sauerstoff-Undurchlässigkeit wird abgelegtes Kompositmaterial, welchem das erfindungsgemässe Stützmaterial aufgelagert ist, vom Umgebungssauerstoff abgeschirmt.

Das Stützmaterial kann alternativ oder zusätzlich zur vorstehend beschriebenen Undurchlässigkeit für Sauerstoff im Wesentlichen durchlässig für elektromagnetische Strahlung im Wellenlängenbereich von 100 bis 1000 nm, bevorzugt 200 bis 800 nm, besonders bevorzugt 300 bis 500 nm, sein. Auf diese Weise kann eine Aushärtung des Kompositmaterials durch eine oder mehrere aufgelagerte Schichten des Stützmaterials erfolgen. Die vorgängig erläuterte Sauerstoff-Undurchlässigkeit des Stützmaterial ermöglicht zudem, dass die äusserste Schicht des Kompositmaterials ausgehärtet werden kann, wenn dieser Stützmaterial aufgelagert ist, da das Kompositmaterial nicht im Kontakt mit Umgebungssauerstoff steht.

Das Stützmaterial kann derart ausgestaltet sein, dass es nicht mit dem eigesetzten Kompositmaterial reagiert. Um also eine optimale Ablösbarkeit zu gewährleisten, ist das Stützmaterial derart ausgestaltet, dass das Stützmaterial keine irreversible chemische Bindungen mit dem Kompositmaterial ausbilden kann.

Das Stützmaterial kann derart ausgestaltet sein, dass es nach der Aushärtung elastisch verformbar ist. Dies kann über eine geringere Vernetzungsdichte im Vergleich zum Kompositmaterial erreicht werden.

Das Stützmaterial ist derart ausgestaltet, dass es sich nicht mit dem Kompositmaterial verbindet und im Wesentlichen nicht daran anhaftet.

Das Stützmaterial kann nicht aushärtbar oder aushärtbar sein. Ein nicht aushärtbares Stützmaterial ist bevorzugt eine standfeste, thixotrope Paste, beispielsweise ein Gel aus Glycerin und pyrogener Kieselsäure; oder ein im geschmolzenen Zustand auftragbares, thermoplastisches Elastomer mit einem Schmelzpunkt < 150°C, bevorzugt < 120°, besonders bevorzugt <90°C.

Bevorzugte thermoplastische Elastomere sind thermoplastische Copolyamide (TPA), thermoplastische Polyesterelastomere (TPE), thermoplastische Polyurethane (TPU), Copolyamide (CoPA), Copolyester-Elastomere (CoPE), Polyvinylalkohol (PVOH).

Aushärtbares Stützmaterial weist ein feuchtehärtendes Material, beispielsweise Silikone, oder ein mit Strahlung/Licht, bevorzugt im UV-Bereich, aushärtbares Material auf. Dabei kann das Stützmaterial derart ausgestaltet sein, dass es mit der gleichen Wellenlänge wie das Kompositmaterial aushärtbar ist. Bevorzugte aushärtbare Materialien des Stützmaterials basieren auf Silikonen, Urethanen, Acrylaten.

Das Stützmaterial kann nach der Verwendung beim Drucken je nach verwendetem Stützmaterial entfernt werden. Abwaschbar sind beispielsweise Stützmaterialien aus wasserlöslichen, standfesten Pasten, wie z.B. Gelen aus Glycerin und pyrogener Kieselsäure.

Stützmaterial basierend auf thermoplastischen Elastomeren oder schwach vernetzten Materialien kann zum Entfernen in einem geeigneten polaren oder apolaren Lösungsmittel aufgelöst werden. Es ist jedoch auch möglich, dass das Stützmaterial lediglich im Lösungsmittel quillt; es kann dann anschliessend mit geringem Aufwand manuell entfernt werden, insbesondere durch Abschälen.

Es ist ebenfalls möglich, dass insbesondere elastisches und/oder bröseliges Stützmaterial mechanisch unter geringem Kraftaufwand und somit schonend entfernt wird, insbesondere durch Abschälen.

Kombinationen der vorgenannten Möglichkeiten zum Entfernen des Stützmaterials können eingesetzt werden. Mit den vorgängig beschriebenen Möglichkeiten der Entfernung des Stützmaterials vom Kompositmaterial wird das gedruckte Kompositmaterial nicht verändert oder zerstört.

Besonders vorteilhaft ist das Stützmaterial gefärbt, um eine einfache visuelle Kontrolle einer vollständigen Entfernung zu gewährleisten. Ein Anwender erkennt, wenn das Stützmaterial nicht vollständig entfernt wurde, da das verbliebene Stützmaterial visuell auffällt.

Das Stützmaterial kann ausgewählt sein aus der Listebestehend aus Polystyrol; Polyphenylsulfon; Wachs; wasserlösliche Polymere, insbesondere Acrylat-Copolymere oder Polyvinylalkohole; weichelastische, gelartige Massen, insbesondere Silikone oder Polyurethane; wasserlösliches standfestes Gel.

Weitere vorteilhafte Eigenschaften des Stützmaterials sind nachfolgend beschrieben.

### i) Temperaturabhängigkeit

Das Stützmaterial kann vorteilhaft derart ausgestaltet sein, dass sich die Materialeigenschaften, insbesondere die Viskosität, im Temperaturbereich zwischen 20 und 60°C nicht wesentlich ändern. Als besonders vorteilhaft hat es sich erwiesen, wenn sich die Temperaturabhängigkeit der Viskosität des Stützmaterials insbesondere in dem genannten Temperaturbereich im Wesentlichen gleich verhält wie Temperaturabhängigkeit der Viskosität des Kompositmaterials. Ferner ist es bevorzugt, wenn das Stützmaterial bis 90°C im Wesentichen temperaturstabil ist, sich also weder entmischt noch zersetzt oder selbständig (bspw. ohne UV-Aktivierung) aushärtet.

### ii) Viskosität

Das Stützmaterial kann des Weiteren vorteilhaft derart ausgestaltet sein, dass es eine Viskosität im nicht-ausgehärteten Zustand aufweist wie vorgängig für das Kompositmaterial ausgeführt.

### iii) Lichtdurchlässigkeit

Das Stützmaterial kann vorteilhaft derart ausgestaltet sein, dass es eine Transluzenz von > 30%, bevorzugt > 80%, bei einer Schichtdicke von 1 mm aufweist bei einer Wellenlänge von 100 bis 1000 nm, bevorzugt 200 bis 800 nm, besonders bevorzugt 300 bis 500 nm.

### iv) Sauerstoffdurchlässigkeit

Das Stützmaterial kann weiter vorteilhaft derart ausgestaltet sein, dass es eine Sauerstoffdurchlässigkeit von < 1000 cm³/(m² d bar), bevorzugt <10 cm³/(m² d bar), aufweist.

### v) Löslichkeit:

Das Stützmaterial kann weiter vorteilhaft derart ausgestaltet sein, dass es bevorzugt bei Raumtemperatur löslich in polaren Flüssigkeiten ist, insbesondere in Wasser. Das Stützmaterial löst sich dabei bevorzugt innerhalb von wenigen Minuten auf.

### vi) Mechanische Werte

Die Zugfestigkeit des Stützmaterials nach dem Auftrag auf das Kompositmaterial kann vorteilhaft grösser 5 MPa sein und ist dabei grösser als die Haftung am Kompositmaterial. Auf diese Weise kann das Stützmaterial in einem Stück entfernt, insbesondere abgezogen, werden.

### vii) E-Modul

Das E-Modul des Stützmaterials ist weichelastisch und kann auch im Bereich von Hinterschnitten an einem Stück abgezogen werden. Dabei kann das Stützmaterial eine Shorehärte A von < 50, bevorzugt < 40, aufweisen.

Des Weiteren kann bevorzugt ein zusätzliches Hilfsmaterial vorgesehen sein, beispielsweise in Form eines Trennmittels. Das Trennmittel kann als dünne Schicht zwischen Kompositmaterial und Stützmaterial angeordnet sein. Auf diese Weise kann für das Kompositmaterial und das Stützmaterial das gleiche Komposit als Basis verwendet werden. Aufgrund des zwischengelagerten Trennmittels verbinden sich das Kompositmaterial und das Stützmaterial nicht.

Bevorzugt wird das Trennmittel als standfeste Paste und als einzelner Strang schichtweise auf das vorgelegte Kompositmaterial aufgebracht. Dabei kann die Schichtdicke des Strangs im Bereich von 50 bis 600pm, bevorzugt 80 bis 300 µm, besonders bevorzugt 180 bis 220 µm sein. Derart wird eine besonders hohe Oberflächenqualität erreicht. Wenn das Trennmittel zusätzlich eine Sauerstoffbarriere bildet, kann es auch zur Verhinderung einer Inhibitionsschicht eingesetzt werden. Das Trennmittel vernetzt nicht mit dem Kompositmaterial und dem Stützmaterial. Ein bevorzugtes Trennmittel ist eine mit pyrogener Kieselsäure eingedickte Paste aus Glycerin. Geeignet sind auch Pasten auf Basis von Paraffinöl, Vaseline oder Silikonöl. Bei diesen Alternativen ist jedoch die zuverlässige und komplette Entfernung notwendig, da sie beim Einsetzten der Restauration die Haftung des Adhäsivsystems beinträchtigen können.

Stützmaterial und Trennmittel und/oder sonstige Hilfsmittel können in gleicher Weise wie zuvor für ein Kompositmaterial beschrieben, in entsprechenden Kartuschen, z.B. einer Stützmittelkartusche bzw. einer Hilfsmittelkartusche, bereitgestellt werden, welche ebenfalls eine Düse aufweisen oder derart ausgebildet sind, dass eine vordefinierte Düse ausbildbar ist. Die Kartuschen können ebenfalls zuvor beschriebene Elemente wie Dichtungen, Kolben, Siebe und Positioniereinrichtungen aufweisen.

Ein weiterer Aspekt der Erfindung betrifft ein Verfahren zur Aushärtung von mindestens einem Kompositmaterial umfassend die Schritte Bereitstellen eines auszuhärtenden Kompositmaterials bevorzugt mittels eines additiven Verfahrens, besonders bevorzugt mittels 3D-Druck; teilweise oder vollständiges Umhüllen des Kompositmaterials mit einem Stützmaterial wie vorgängig erläutert; Aushärten des Kompositmaterials mit elektromagnetischer Strahlung mit einer Wellenlänge im Bereich von 100 bis 1000 nm, bevorzugt 200 bis 800 nm, besonders bevorzugt 300 bis 500 nm, für welchen das Stützmaterial im Wesentlichen durchlässig ist; und Entfernen des Stützmaterials. Auf diese Weise wird ein Verfahren zur Verfügung gestellt, wobei ein vollständiges Aushärten aller Schichten des Kompositmaterials möglich ist. Bei herkömmlichen Verfahren härtet die äusserste Schicht des Kompositmaterials, welche selbst eine Art Sauerstoffbarriere bildet, nicht aus und muss nach dem Aushärten der darunterliegenden Schichten entfernt werden. Die Sauerstoffbarriere bildet im erfindungsgemässen Verfahren das aufgetragene Stützmaterial. Es muss somit für den 3D-Druck kein überschüssiges Kompositmaterial aufgetragen werden, welches anschliessend entfernt werden müsste.

Selbstverständlich kann ein Kompositmaterial oder mehrere Kompositmaterialien, welche sich insbesondere in ihrer Zusammensetzung wie beispielsweise Schmelzmasse, Dentinmasse, Effektfarbe unterscheiden, für das erfindungsgemässe Verfahren bereitgestellt sein.

Die Begriffe "Umgeben" oder "Umhüllen" beziehen sich auf die geometrische Gestalt des hergestellten Zahnersatzteil oder auf eine einzelne Schicht nach ihrer Herstellung, so dass das Stützmaterial teilweise oder vollständig das Zahnersatzteil bzw. die Schicht in Form einer Hülle umgibt. Es impliziert jedoch keine bestimmte Reihenfolge bei der Herstellung bzw. dem Drucken der einzelnen Schichten.

So können beispielsweise Dentinmasse und Schmelzmasse als verschiedene mit unterschiedlichen mechanischen Eigenschaften und/oder unterschiedlichen optischen Eigenschaften für eine gewünschte Zahnfarbe und Transluzenz bereitgestellt sein. Mehrere Kartuschen können entweder separat und zur separaten Aufnahme im Druckkopf eines 3D-Druckers vorgesehen sein, wobei der Druckkopf entsprechende Aufnahmen aufweist. Alternativ oder zusätzlich können mehrere Kartuschen aber auch als Baufeinheit zu einer Kombi-Kartusche zusammengefasst sein.

Ein weiterer Aspekt der Erfindung betrifft ein Verfahren zur generativen Herstellung, insbesondere 3D-Druck, von Zahnersatzteilen. Das Verfahren umfasst den Schritt des Auspressens und Härtens von Kompositmaterial aus mindestens einer Kartusche derart, dass ein Zahnersatzteil gebildet wird. Die Kartusche ist dabei wie vorgängig erläutert ausgestaltet. Auf diese Weise werden die Vorteile der vorgängig beschriebenen Kartusche in einem Verfahren zur generativen Herstellung von Zahnersatzteilen nutzbar gemacht. Selbstverständlich kann eine Kartusche oder mehrere Kartuschen, insbesondere mit unterschiedlichen Inhalten, für das erfindungsgemässe Verfahren bereitgestellt sein. Sind mehrere Kartuschen bereitgestellt, so weisen diese insbesondere unterschiedliche Kompositmaterialien wie vorgängig erläutert auf. Die eine Kartusche oder die mehreren Kartuschen können über eine CAM-Software gesteuert werden.

Insbesondere kann das Verfahren das Auspressen und Härten eines Dentin-Kompositmaterials sowie eines Schmelz-Kompositmaterials umfassen, wobei das Dentin-Kompositmaterial und das Schmelz-Kompositmaterial unterschiedliche mechanische und/oder optische Eigenschaften aufweisen. Dabei umfasst das Verfahren ein Ablegen von Dentin-Kompositmaterial und Schmelz-Kompositmaterial derart, dass das Schmelz-Kompositmaterial das Dentin-Kompositmaterial zumindest teilweise umgibt oder umhüllt.

In dem vorgängig beschriebenen Verfahren kann des Weiteren ein Stützmaterial bereitgestellt sein, welches wie vorgängig erläutert ausgestaltet ist. Das Stützmaterial wird dabei zum Stützen komplexer Strukturen vorgelegt. Entsprechend wird auf das vorgelegte Stützmaterial Kompositmaterial, welches das Zahnersatzteil bildet, abgelegt. Auf diese Weise können komplexe Strukturen im generativen Verfahren, insbesondere im 3D-Druck, ausgebildet werden.Das Verfahren kann das Ausdrücken und optionale Aushärten von Stützmaterial aus einer Kartusche umfassen.

Insbesondere kann das Verfahren ein Ablegen von Stützmaterial in solchen Bereichen umfassen, welche beim fertiggestellten Zahnersatzteil Ausnehmungen, Ausbrüche oder Kavitäten bilden. So kann das Verfahren das Ablegen und optionale Härten von Stützmaterial in einem zentralen oder mittleren Bereich des Zahnersatzteils und das anschliessende Umgeben oder Umhüllen mit Kompositmaterial, wie Dentin-Kompositmaterial und/oder Schmelz-Kompositmaterial, umfassen. Der Bereich des Stützmaterials erstreckt sich dabei beispielsweise bis zu einer Basis des Zahnersatzes, so dass das fertige Zahnersatzteil in einem zentralen Bereich eine Ausnehmung aufweist. Nach dem späteren Entfernen des Stützmaterials wie zuvor beschrieben dient die Kavität zum Aufsetzend des Zahnersatzteils, z. B. einer Krone, auf ein Zahnimplantat, einen verbliebenen etc.

In der zuvor beschriebenen Verfahrensvariante erfolgt der Aufbau des Zahnersatzteils mittels 3D-Druck beginnend mit der Basis zur Kaufläche hin. Ebenfalls möglich ist ein umgekehrtes Vorgehen, bei dem der Aufbau des Zahnersatzteils mit der Kaufläche beginnt. In diesem Fall umfasst das Verfahren ein Ablegen und optionale Härten von Stützmaterial entsprechend der negativen oder inversen Kontur der Kaufläche. Dieses Stützmaterial dient als Fundament, auf welchem anschliessend Kompositmaterial abgelegt und gehärtet wird.

Das vorgängig beschriebene Verfahren kann des Weiteren die Schritte umfassen: Bereitstellen eines Stützmaterials wie vorgängig erläutert; teilweise oder vollständiges Umhüllen des abgelegten Kompositmaterials mit dem Stützmaterial; Aushärten des Kompositmaterials mittels elektromagnetischer Strahlung mit einer Wellenlänge im Bereich von 100 bis 1000 nm, bevorzugt 200 bis 800 nm, besonders bevorzugt 300 bis 500 nm, durch das Stützmaterial hindurch. Auf diese Weise wird ein teilweise oder vollständig mit Stützmaterial umhülltes, abgelegtes Kompositmaterial in einem definierten Wellenlängenbereich vorteilhaft ausgehärtet, wobei auch die an das Stützmaterial angrenzende Schicht des Kompositmaterials ausgehärtet wird. Somit ist ein anschliessender Materialverlust, welches herkömmlicherweise beim Entfernen der äussersten, nicht-ausgehärteten Kompositmaterialschicht stattfindet, ausgeschlossen. Entsprechend muss zur Herstellung eines Zahnersatzteils kein überschüssiges Material aufgetragen werden. Dies erhöht die Fertigungszeit, erlaubt eine präzise Fertigung, reduziert die entstehenden Materialkosten und macht einen Entfernungsschritt der äusseren nicht-ausgehärteten Schicht unnötig. Selbstverständlich kann ein Stützmaterial oder mehrere, insbesondere unterschiedliche, Stützmaterialien für das erfindungsgemässe Verfahren bereitgestellt sein. Das Stützmaterial oder mehrere Stützmaterialien kann in einer oder mehreren Kartuschen bereitgestellt sein.

Das Verhältnis aus Viskosität des Kompositmaterials im unausgehärteten Zustand zum Düsendurchmesser kann im Bereich von 0.033 bis 40 Pa*s/µm, bevorzugt 0.5 bis 10.0 Pa*s/µm, besonders bevorzugt 0.8 bis 5.0 Pa*s/µm liegen. Auf diese Weise ist ein Verstopfen der Düse ausgeschlossen und eine optimale Handhabbarkeit des Kompositmaterials gewährleistet. Dies reduziert die Störanfälligkeit, optimiert so die Fertigungszeit und reduziert die Herstellungskosten. Allgemein kann die Viskosität des Kompositmaterials im unausgehärteten Zustand im Bereich von 10 bis 2000 Pa*s liegen. Allgemein kann der Düsendurchmesser im Bereich von 50 bis 300 µm liegen.

Ein weiterer Aspekt betrifft die Verwendung einer Kartusche wie vorgängig erläutert zur generativen Herstellung von Zahnersatz, insbesondere mittels 3D-Druckverfahren.

Ein weiterer Aspekt betrifft die Verwendung von Stützmaterial wie vorgängig erläutert in einem additiven Verfahren, insbesondere im 3D-Druck.

Ein weiterer Aspekt betrifft ein Kit-of-parts, im Sinne eines Systems, umfassend die Komponente a., die optionale Komponente b. und die Komponente c. Komponente a. umfasst eine Kartusche.

Insbesondere umfasst die Komponente a. mehrere Kartuschen mit unterschiedlichen Kompositmaterialien. Dabei unterscheiden sich einzelne der mehreren Komposite in Farbe und/oder Transluzenz uns/oder bezüglich der Füllstoffzusammensetzung, insbesondere zum Einstellen unterschiedlicher mechanischer Eigenschaften oder Glanzbeständigkeit. Die optionale Komponente b. umfasst ein Stützmaterial insbesondere mehrere Stützmaterialien. Dabei unterscheiden sich einzelne der mehreren Stützmaterialien in den durchlässigen Wellenlängenbereichen und/oder der Viskosität. Die Komponente c. umfasst Anwendungshinweise zur Herstellung von Zahnersatz. Die optionale Komponente b. kann ferner eine Kartusche umfassen, welche das Stützmaterial enthält bzw. in welcher das Stützmaterial bereitgestellt ist.

Im Rahmen der Erfindung bevorzugte Kompositmaterialien sind die folgenden:
A. Dentales Kompositmaterial umfassend
   a. eine aushärtbare, insbesondere lichtaushärtbare, Matrix;
   b. nur Füllstoffe mit einer maximalen Partikelgrösse von < 5 µm,
      wobei das dentale Kompositmaterial in nicht-ausgehärtetem Zustand eine Viskosität im Bereich von 1 - 10'000 Pa*s, bevorzugt von 10 - 2000 Pa*s, besonders bevorzugt 50 - 800 Pa*s aufweist, insbesondere gemäss Bestimmung der Viskosität im Rheometer wie nachstehend in den Ausführungsbeispielen erläutert.
B. Dentales Kompositmaterial gemäss A, wobei das Material der Matrix Monomerer umfasst ausgewählt aus der Gruppe umfassend BisGMA, BisEMA, UDMA, EGDMA, DEGDMA, TEGDMA, TCD-Di-HEA, Isobornylmethacrylat.
   Diese Auswahl ist nicht abschliessend und es können durchaus weitere Monomere, insbesondere Acrylatmonomere zugefügt werden. Diese können mono-, di- oder trifunktional, aromatisch, cycloaliphatisch, heterocylisch, linear oder verzweigt sein.
C. Dentales Kompositmaterial gemäss A oder B, wobei die Füllstoffe ausgewählt sind aus der Liste
   a. gemahlenes Dentalglas aus Glaskeramik, wobei Partikel mit einer Grösse > 5µm abgetrennt sind;
   b. gemahlene Glaskeramik, wobei Partikel mit einer Grösse > 5µm abgetrennt sind;
   c. kugelförmige Silikate mit Partikelgrössen im Bereich von 0.1 bis 1 µm;
   d. aggregierte Nanopartikel, beispielsweise pyrogene Kieselsäure;
   e. nicht aggregierte Nanopartikel auf Basis von SiO₂, oder auf Basis von Mischoxiden aus Si, Sr, Y, Zr, Nb, Ba, La, Hf, Ta, Yb, Ce; hergestellt nach Sol-Gel Verfahren oder Flammpyrolyse;
   f. nicht agglomerierte Partikel auf Basis von Ytterbiumfluorid.

   Unter e. angeführte Nanopartikel sind beispielsweise als Levasil 200A/40% von Bayer erhältlich.
D. Dentales Kompositmaterial gemäss A, B oder C, wobei der Füllstoff einen Gewichtsprozentanteil des Kompositmaterials im Bereich von 20-90 Gew.-%, bevorzugt 40-80 Gew.-%, besonders bevorzugt 55-75 Gew.-%, aufweist.
E. Dentales Kompositmaterial gemäss A, B, C oder D, wobei der Füllstoff agglomerierte und/oder nicht-agglomerierte Nanopartikel aufweist.
F. Dentales Kompositmaterial gemäss A, B, C, D oder E umfassend Photoinitiatoren ausgewählt aus der Liste Campherchinon, Acylphosphinoxide wie bspw. Lucirin TPO, Phenylbis(2,4,6-trimethylbenzoyl)-phosphine oxide (BAPO); Gemaniumverbinungen.
   Dabei können die Photoinitiatoren auf die Lichtquelle am 3D Drucker abgestimmt werden, beispielsweise Campherchinon für Blaulichthärtung mit einem Strahlungsmaximum im Bereich von 450 bis 470 nm; Acylphosphinoxide wie beispielsweise Lucirin TPO, BAPO für Violett/UV Härtung mit Strahlungsmaximum im Bereich von 380 bis 400 nm; Germaniumverbindungen wie DBDEGe. BAPO ist beispielsweise als Irgacure 819 von CIBA erhältlich.
G. Verfahren zur Herstellung von dentalem Kompositmaterial, wobei in eine aushärtbare, insbesondere lichtaushärtbare Matrix ein Füllstoff eingearbeitet wird, wobei die maximale Partikelgrösse des Füllstoffes < 5 µm ist.
H. Verfahren gemäss G umfassend ein Fraktionierungsverfahren ausgewählt aus der Liste Sichten im Wirbelbett, Nassfiltration, Sedimentation, Zentrifugation.
   Für die Nassfiltration kann als Lösungsmittel destilliertes Wasser eingesetzt werden. Anschliessend wird das Lösungsmittel durch Zentrifugieren reduziert. Der Füllstoff muss aber nicht vollständig vom Lösungsmittel befreit werden.
I. Verfahren zur Aufarbeitung eines Füllstoffes zur Einarbeitung in einem Kompositmaterial gemäss A bis H oder zur Verwendung in einem Verfahren gemäss F oder G umfassend die Schritte
   a. Bereitstellung eines Füllstoffes, der frei ist von Partikeln > 5 µm,
   b. Abtrennen von Partikeln > 5 µm, sodass ein Füllstoff mit einer maximalen Partikelgrösse von < 5 µm erhalten wird.

Wird das Abtrennen in einer wässrigen Suspension bewerkstelligt, so wird das Wasser durch Zentrifugieren grösstenteils entfernt. Für eine gute Verbindung von Harz und Füller kann der Füllstoff silanisiert sein. Eine Nass-Silanisierung wird dabei bevorzugt, da durch die wegfallende Trocknung keine Agglomerate des Füllstoffes entstehen. Als Massnahme zur Verhinderung von Agglomeraten des Füllstoffes kann während dem Silanisieren zusätzlich Ultraschall appliziert werden. Die Paste, aus welcher das dentale Kompositmaterial herstellbar ist, kann mittels zwei Flügelknetern und/oder einem Dreiwalzenstuhl geknetet und homogenisiert werden. Da die Luftfreiheit Grundvoraussetzung für einen stabilen Druckprozess ist, wird das dentale Kompositmaterial anschliessend entlüftet. Dies geschieht beispielsweise in den Flügelknetern und/oder in einer Zentrifuge.

### AUSFÜHRUNGSBEISPIELE

Die nachfolgende Tabelle zeigt eine erste erfindungsgemässe Zusammensetzung eines Kompositmaterials.

| | | |
|---|---|---|
| Ba Glas 0.2 µm, silanisiert | 53 Gew.% | GM27884 NF180 (Schott) |
| Pyrogene Kieselsäure | 2 Gew.% | Aerosil R711 (Degussa) |
| Nano SiO₂ | 10 Gew.% | Levasil 200A/40% (Bayer) |
| BisGMA | 16 Gew.% | Bisphenol A glycerolate dimethacrylate, 494356 (Sigma Aldrich) |
| BisEMA | 14 Gew.% | 2.2-bis 4-methacryloxy-ethoxy phenyl propan, Sartomer SR101 (Arkema) |
| TEGDMA | 4 Gew.% | Triethylene glycol dimethacrylate, 261548 (Sigma Aldrich) |
| Initiatoren und Stabilisatoren | 1 Gew.% | |

Die nachfolgende Tabelle zeigt eine zweite erfindungsgemässe Zusammensetzung eines Kompositmaterials.

| | | |
|---|---|---|
| Ba Glas 0.7 µm, silanisiert | 55 Gew.% | EG 2738 0.7 (Ferro Corporation) |
| Pyrogene Kieselsäure | 2 Gew.% | Aerosil R711 (Degussa) |
| Nano SiO₂ | 10 Gew.% | Levasil 200A/40% (Bayer) |
| BisGMA | 15 Gew.% | Bisphenol A glycerolate dimethacrylate, 494356 (Sigma Aldrich) |
| BisEMA | 13 Gew.% | 2.2-bis 4-methacryloxy-ethoxy phenyl propan, Sartomer SR101 (Arkema) |
| TEGDMA | 4 Gew.% | Triethylene glycol dimethacrylate, 261548 (Sigma Aldrich) |
| Initiatoren und Stabilisatoren | 1 Gew.% | |

### BESTIMMUNG DER VISKOSITÄT

Die Viskosität wird im Rahmen der Erfindung wie vorstehend erwähnt in einem StressTech-Rheometer von ATS RheoSystems bestimmt. Die Standfestigkeit eines Materials zeigt sich ungefähr bei Schergeschwindigkeiten von 0.01s⁻¹ bis 10s⁻¹. Da die Vorgabe von derart tiefen Schergeschwindigkeiten messtechnisch schwierig ist, und bei aushärtenden Materialien im Oszillationsmodus gemessen wird, wird die Viskosität bei einer zerstörungsfreien Deformation (0.01) und 1Hz bestimmt. Das Messsystem ist eine flache Bodenplatte (plate-plate P15). Die Messung wird bei einer Temperatur von 23 °C durchgeführt. Der Spalt weist eine Tiefe von 1 mm auf. Für das Auftragen der Probe wurde eine Flow Spritze mit Applikationsnadel verwendet. Die Einstellungen am StessTech-Rheometer sind nachfolgend aufgeführt:

| Methode | Oszillation Deformation |
|---|---|
| Messsystem | P15 |
| Messtemperatur | 23°C |

### Steuerung Normalkraft

| | |
|---|---|
| Ladevorgang | Methode: auf Spalt |
| | Max. Normalkraft: 5.00 N |
| Ausgleich | Messbeginn wenn unter 5.65 N Max. Dauer: 1000 s |
| Probe trimmen | inaktiv |
| Probenhöhe | 1 mm |
| Einheit | N |

### Frequenz und Deformation

| | |
|---|---|
| Frequenz | 1 Hz |
| Verzögerung | 1s |
| Integrationsperiode | 1 |
| Deformation | 0.01 |
| Grösse | 512 |
| 1.Stress | 10 Pa |

Kontinuierlich aktiv

### Temperatur und Zeit

| | |
|---|---|
| Vorscheren | inaktiv |
| Ausgleichszeit | inaktiv |
| Anzahl Messungen | 10 |
| Messintervall | 1 s |

T nach Messung manuell eingegebener Wert

### Zusatzfunktionen

| | |
|---|---|
| Auflösung | 4 rad |
| Deformationsgrenzwert | 1% |
| Max. Anz. Iterat. | 5 |

Vorhergehender Wert wird verwendet.

Die Figuren zeigen:
- Figur 1:: Eine Seitenansicht einer Kartusche;
- Figur 2:: Einen vertikalen Schnitt einer Kartusche;
- Figur 3:: Eine Ansicht einer Kartusche von oben;
- Figur 4:: Einen Schnitt einer Kartusche mit Dichtelementen in einem 3D-Drucker;
- Figur 5:: Einen Schnitt einer Kartusche mit einer weiteren Anordnung eines Dichtelements;
- Figur 6:: Einen Schnitt einer Kartusche mit einer weiteren Anordnung eines Dichtelements;
- Figur 7:: Einen Schnitt einer weiteren Ausführungsform einer Kartusche.
- Figur 8:: Eine weitere Ausführungsform einer Kartusche in einer Seitenansicht (Fig. 8a) und im Schnitt (Fig. 8b).

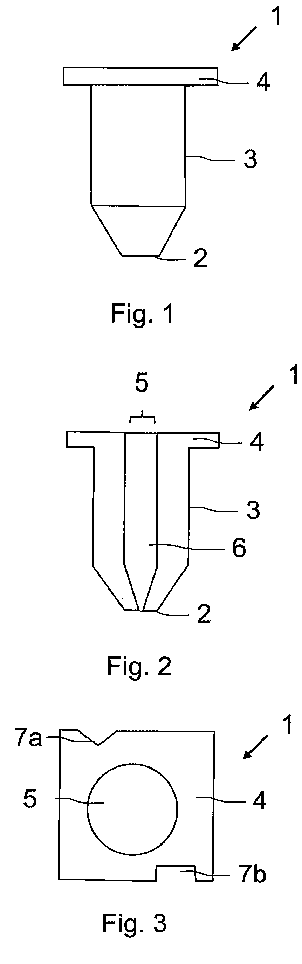

Figur 1 zeigt eine Kartusche 1 in einer Seitenansicht. Die Kartusche 1 umfasst eine Düsenöffnung 2, eine Wand 3 und eine obere Begrenzung 4. Im unteren Bereich, welcher in der Düsenöffnung 2 endet, ist die Wand 3 abgeschrägt und läuft zusammen. Im oberen Bereich ist die Wand 3 zylindrisch ausgestaltet und bildet so ein Reservoir für ein Kompositmaterial (vgl. Figuren 2 bis 4). Die obere Begrenzung 4 der Kartusche 1 sorgt für eine Kontaktierung eines 3D-Druckers.

Die Figur 2 zeigt einen Schnitt einer Kartusche 1. Die Kartusche 1 umfasst eine Düsenöffnung 2, eine Wand 3 und eine obere Begrenzung 4. Die Begrenzung 4 weist eine Aussparung zur Aufnahme eines Presselements auf. Das Reservoir 6, welches von der die Aussparung 6 umlaufenden Wand 3 gebildet wird, weist ein Kompositmaterial und einen Kolben auf (nicht gezeigt). Mittels der Aussparung 5 wird ein Presselement von der Kartusche aufgenommen, welches den Kolben innerhalb der Kartusche in Richtung der Düsenöffnung 2 verschieben kann. Auf diese Weise kann das Kompositmaterial des Reservoirs 6 der Kartusche 1 durch die Düsenöffnung 2 hindurch ausgelassen werden.

Figur 3 zeigt eine Ansicht der Kartusche von oben. Die obere Begrenzung 4 weist die Aussparung 5 auf (vgl. Figur 2). Des Weiteren sind ein erster Index 7a und ein zweiter Index 7b gezeigt. Die Kartusche 1 kann selbstverständlich auch nur einen der gezeigten Indices aufweisen. Mittels des Indexes 7a und/oder des Indexes 7b wird eine Fehlverwendung der Kartusche 1 in einem 3D-Drucker vermieden. Der Index 7a und/oder der Index 7b wird dabei in ein entsprechendes Gegenstück positioniert. Weist also eine eingelegt Kartusche den zu dem 3D-Drucker, bzw. der Aufnahme der Kartusche am 3D-Drucker, passenden Index nicht auf, so ist eine Verwendung der Kartusche ausgeschlossen. Der Index oder die Indices der Kartusche bilden dementsprechend eine Schnittstelle für einen 3D-Drucker.

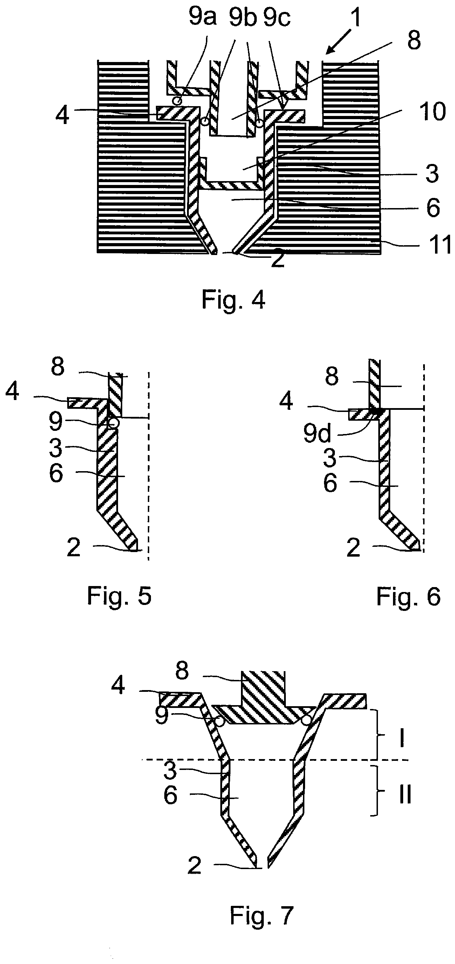

Figur 4 zeigt einen Schnitt einer erfindungsgemässen Kartusche 1 in einem 3D-Drucker 11. Gezeigt sind ebenfalls die Dichtelemente 9a, 9b und 9c. Die erfindungsgemässe Kartusche 1 kann selbstverständlich nur eines oder mehrere der gezeigten Dichtelemente aufweisen. Die Dichtelement 9a und 9b sind O-Ringe. Das Dichtelement 9a ist im Aussenbereich der Kartusche 1 auf der oberen Begrenzung 4 angeordnet. Das Dichtelement 9b ist in einem inneren Bereich der Kartusche 1 an der Wand 3 angeordnet. Die Dichtelemente 9a und 9b bilden Dichtungen zwischen der Kartusche 1 und dem Presselement 8. Das Dichtelement 9c wird durch eine Kante gebildet, welche auf dem Presselement 8 angeordnet ist und eine Kerbe in das Material der Kartusche 1 schlägt. Die Presselement 9a, 9b und 9c gewährleisten eine Dichtung der Kartusche 1 und des Presselements 8 gegenüber der Umgebung. Da das Presselement 8 als Pressluft-Stutzen ausgebildet ist, ist eine Abdichtung gegenüber der Umgebung erforderlich, um den Kolben 10 in Richtung der Düsenöffnung 2 zu bewegen.

Die Figuren 5 und 6 zeigen weitere Ausführungen des Dichtelements 9, 9d der Kartusche 1. Gezeigt sind vertikale Schnitte der Kartusche 1. Zur vereinfachten Darstellung ist jeweils nur eine Hälfte der angeschnittenen Kartuschen 1 gezeigt. Das Dichtelement 9 der Kartusche 1 in Figur 5 ist ein O-Ring, welcher auf einem Sockel der Wand 3 im Inneren der Kartusche 1 angeordnet ist. Das Presselement 8, welches ein Pressluft-Stutzen ist, presst auf den O-Ring, welcher, da er durch den in der Wand 3 angeordneten Sockel in Position gehalten wird, zwischen Sockel und Stutzen verklemmt wird. Entsprechend effizient ist die erzielte Dichtwirkung. Figur 6 zeigt eine alternative Ausführung eines Dichtelement 9d, welches sich im äusseren Bereich de Kartusche 1 auf der oberen Begrenzung 4 befindet. Die entsprechende Stelle weist elastische Materialeigenschaften auf. Das Presselement 8 in Form eine Pressluft-Stutzens setzt an die elastische Stelle an und drückt diese ein, so dass eine Dichtwirkung sichergestellt ist.

Figur 7 zeigt einen vertikalen Schnitt einer Kartusche 1. Die Kartusche 1 weist zwei Bereiche I, II der Wand 3 auf. Einen oberen ersten Bereich I, in welchem ein Dichtelement 9 in Form eines O-Rings angeordnet ist. Der erste Bereich I ist abgeschrägt. Im ersten Bereich I setzt ein Presselement 8 in Form eines Pressluft-Stutzens an das Dichtelement 9 an. Entsprechend wird eine Dichtwirkung gegenüber der Umgebung erreicht. Ein zweiter unterer Bereich II der Wand 3 ist zylindrisch ausgestaltet und dient als Reservoir, in welchem sich Kompositmaterial befindet (nicht gezeigt). Die zylindrische Ausgestaltung ermöglicht ein Verschieben eines Kolben (nicht gezeigt; vgl. Figur 4) mittels des Pressluft-Stutzens in dem zweiten unteren Bereich II der Kartusche 1 in Richtung der Düsenöffnung 2, wodurch Kompositmaterial durch die Düsenöffnung 2 hindurch ausgelassen werden kann.

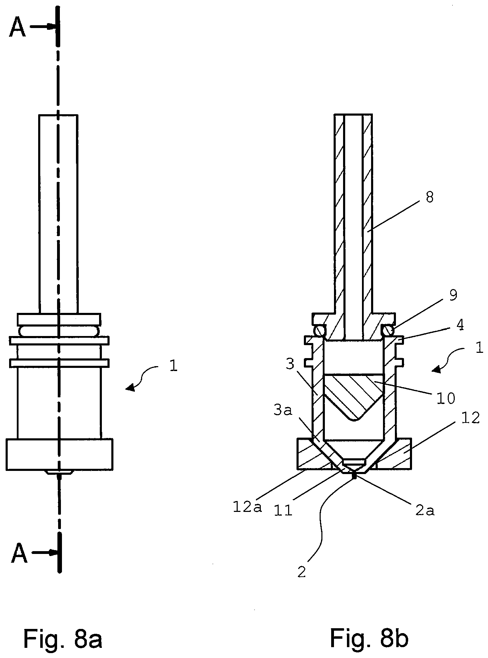

Fig. 8a zeigt eine weitere Ausführungsform einer erfindungsgemässen Kartusche 1 (die Längsachse der Kartusche ist mit A-A gekennzeichnet); Fig. 8b zeigt diese Kartusche 1 in einer Schnittdarstellung. In dieser Ausführungsform ist die Düsenöffnung 2 am unteren Ende einer als zylindrische Hohlkanüle gestalteten Düse 2a angeordnet, wobei die Düse von dem durch die Wand 3 gebildeten Kartuschenkörper abragt und in diesen z.B. dichtend eingepresst oder eingeklebt ist. Eine solche Anordnung vermeidet vorteilhaft ein Verschmieren benachbart abgelegter Materialstränge sowie eine unerwünschte Materialanhäufung an der Düsenöffnung 2.

Die Kartusche gemäss Figur 8a/b weist ferner eine Positioniereinrichtung auf, welche durch einen kegelstumpfförmigen Endabschnitt 3a des Kartuschenkörpers sowie ein einen Teil des Endabschnitts 3 kragenförmig umschliessendes Anschlagelement 12 mit einer entsprechenden kegeligen Innenkontur gebildet wird. Dabei ragt ein unterer Teil des kegelstumpfförmigen Endabschnitts 3a aus dem Anschlagelement 12 heraus und bildet so ein kegelstumpfförmiges Zentrierelement 11 für die definierte Aufnahme im 3D-Drucker. Ein definierter und eng tolerierter Abstand zwischen der unteren Begrenzung 12a des Anschlagelements 12 und der Düsenöffnung 2a gewährleistet eine definierte und reproduzierbare Position der Düsenöffnung 2. Entsprechend dem kegelstumpfförmigen Endabschnitt 3a weist auch der Kolben 10 hier einen Bereich mit korrespondierender Gestalt auf, um ein möglichst vollständiges Ausdrücken bzw. Entleeren der Kartusche 1 zu gewährleisten.

Die in Figur 8a/b gezeigte Düsengestaltung und die Positioniereinrichtung sind funktional unabhängig und können einzeln oder gemeinsam vorhanden sein. Ebenso ist die Kombination mit weiteren Elementen anderer Ausführungsformen, insbesondere Indices möglich.

Mehrere Kartuschen für mehrere Materialien, z. B. Dentin-Kompositmaterial, Schmelz-Kompositmaterial und Stützmaterial können in grundsätzlich gleicher Weise aufgebaut sind, wobei die konkreten Geometrien von Kartusche und Düse je nach Material- und Fliesseigenschaften gleich oder unterschiedlich sein können. Entsprechend kann eine korrespondierende Aufnahme oder ein Druckkopf des 3D-Druckers zur gleichzeitigen Aufnahme mehrerer Kartuschen ausgelegt sein. Sind die Kartuschen mit Indices versehen, wie im Zusammenhang von Figur 3 erläutert, weisen Kartuschen mit unterschiedlichen Materialien, z. B. Dentin-Kompositmaterial, Schmelz-Kompositmaterial und Stützmaterial, sowie die entsprechende Aufnahme oder Aufnahmen des 3D-Druckers unterschiedliche Indizierungen auf, um ein korrektes Einsetzen der Kartuschen mit unterschiedlichen Materialien an den zugehörigen Positionen zu gewährleisten. Dagegen weisen Kartuschen mit alternativ verwendbaren Materialen, z. B. Kompositmaterialien unterschiedlicher Färbung und/oder Transluzenz vorteilhaft identische Indices auf.

## Patentansprüche

1. Kartusche (1), die dentales Kompositmaterial enthält, für einen 3D-Drucker, wobei die Kartusche (1) eine Düse aufweist oder derart ausgebildet ist, dass eine vordefinierte Düse ausbildbar ist, wobei die Düse einen zylindrischen Endbereich umfasst mit einer Länge vom 1 bis 30 fachen des Innen-Düsendurchmessers am Austritt, und wobei das Kompositmaterial umfasst
a. eine aushärtbare, insbesondere lichtaushärtbare, Matrix,
b. nur Füllstoffe mit einer maximalen Partikelgrösse von < 5 µm,
wobei das dentale Kompositmaterial in nicht-ausgehärtetem Zustand bei 23° C eine Viskosität im Bereich von 1 bis 10'000 Pa*s, bevorzugt von 10 bis 2000 Pa*s, besonders bevorzugt 50 bis 800 Pa*s, aufweist.

2. Kartusche (1) gemäss Anspruch 1, wobei das Grössenverhältnis des Düsendurchmessers der Kartusche (1) zur grössten Partikelgrösse des Kompositmaterials 10:1, bevorzugt 30:1, besonders bevorzugt 50:1, ist.

3. Kartusche (1) gemäss Anspruch 1 oder 2, aufweisend einen Kolben (10) zum Verdrängen des Kompositmaterials durch die Düse aus der Kartusche (1).

4. Kartusche (1) gemäss einem der vorhergehenden Ansprüche, wobei in der Kartusche (1) ein Sieb vor dem Austritt der Düse angeordnet ist, durch welches das Kompositmaterial beim Verdrängen aus der Kartusche (1) hindurchleitbar ist.

5. Kartusche (1) gemäss einem der Ansprüche 1 bis 4, wobei die Kartusche (1) derart ausgestaltet ist, dass eine Düse durch Anschneiden oder durch Punktieren, insbesondere mittels eines Lasers, ausbildbar ist.

6. Kartusche (1) gemäss einem der Ansprüche 1 bis 5 aufweisend mindestens ein Dichtelement (9a, 9b, 9c), wobei das Dichtelement derart ausgestaltet ist, dass die Kartusche (1) gegenüber einem an der Kartusche (1) anordenbaren Presselement (8) zum Verdrängen des Kompositmaterials abdichtbar ist.

7. Kartusche (1) gemäss Anspruch 6, wobei das mindestens eine Dichtelement (9a, 9b, 9c) an einem äusseren Bereich der Kartusche (1) oder in einem inneren Bereich der Kartusche oberhalb des Presselements (8), welches an einen Reservoirbereich (6) angrenzt, wobei der Reservoirbereich (6) das Kompositmaterial enthält, angeordnet ist.

8. Kartusche (1) gemäss einem der Ansprüche 1 bis 7, wobei die Kartusche (1) eine Wärmeleitfähigkeit von 0.1 bis 400 W/mK, bevorzugt 0.2 bis 250 W/mK, besonders bevorzugt 70 bis 250 W/mk aufweist.

9. Verfahren zur generativen Herstellung, insbesondere 3D-Druck, von Zahnersatzteilen umfassend den Schritt des Auspressen und Härtens von Kompositmaterial aus mindestens einer Kartusche (1) gemäss einem der Ansprüche 1 bis 8 derart, dass ein Zahnersatzteil gebildet wird.

10. Verfahren gemäss Anspruch 9, wobei das Verhältnis aus Viskosität des Kompositmaterials im unausgehärteten Zustand zum Düsendurchmesser im Bereich von 0.033 bis 40 Pa*s/µm, bevorzugt 0.5 bis 10.0 Pa*s/µm, besonders bevorzugt 0.8 bis 5.0 Pa*s/µm liegt.

11. Verwendung einer Kartusche (1) gemäss einem der Ansprüche 1 bis 8 zur generativen Herstellung von Zahnersatz, insbesondere mittels 3D-Druckverfahren.

12. Kit-of-parts umfassend
a. eine Kartusche (1) gemäss einem der Ansprüche 1 bis 8, insbesondere mehrere Kartuschen (1) gemäss einem der Ansprüche 1 bis 8 mit unterschiedlichen Kompositmaterialien, wobei sich einzelne der mehreren Komposite in Farbe und/oder Transluzenz und/oder bezüglich der Füllstoffzusammensetzung unterscheiden;
b. optional: ein Stützmaterial wobei das Stützmaterial derart ausgestaltet ist, dass es
i) im Wesentlichen Sauerstoff-undurchlässig ist; oder im Wesentlichen durchlässig ist für elektromagnetische Strahlung im Wellenlängenbereich von 100 bis 1000 nm, bevorzugt 200 bis 800 nm, besonders bevorzugt 300 bis 500 nm;
ii) insbesondere biokompatibel ist,
insbesondere mehrere Stützmaterialien, wobei sich einzelne der mehreren Stützmaterialien in den durchlässigen Wellenlängenbereichen und/oder der Viskosität unterscheiden,
c. Anwendungshinweise zur Herstellung von Zahnersatz.

## Claims

1. A cartridge (1) containing dental composite material for a 3D printer, wherein the cartridge (1) has a nozzle or is configured to form a predefined nozzle, wherein the nozzle comprises a cylindrical end portion having a length of from 1 to 30 times the inner nozzle diameter at the outlet, and wherein the composite material comprises
a. a curable, in particular light-curable, matrix,
b. only fillers with a maximum particle size of < 5 µm, the dental composite material in the uncured state at 23°C having a viscosity in the range from 1 to 10,000 Pa*s, preferably from 10 to 2000 Pa*s, particularly preferably from 50 to 800 Pa*s.

2. Cartridge (1) according to claim 1, wherein the size ratio of the nozzle diameter of the cartridge (1) to the largest particle size of the composite material is 10:1, preferably 30:1, more preferably 50:1.

3. Cartridge (1) according to claim 1 or 2, comprising a piston (10) for displacing the composite material through the nozzle out of the cartridge (1).

4. Cartridge (1) according to any one of the preceding claims, wherein a sieve is arranged in the cartridge (1) in front of the outlet of the nozzle, through which sieve the composite material can be passed when being expelled from the cartridge (1).

5. Cartridge (1) according to any one of claims 1 to 4, wherein the cartridge (1) is configured in such a way that a nozzle can be formed by cutting or by puncturing, in particular by means of a laser.

6. Cartridge (1) according to any one of claims 1 to 5, comprising at least one sealing element (9a, 9b, 9c), wherein the sealing element is configured such that the cartridge (1) is sealable with respect to a pressing element (8) that can be arranged on the cartridge (1) for displacing the composite material.

7. Cartridge (1) according to claim 6, wherein the at least one sealing element (9a, 9b, 9c) is arranged at an outer region of the cartridge (1) or in an inner region of the cartridge above the pressing element (8) which is adjacent to a reservoir region (6), the reservoir region (6) containing the composite material.

8. Cartridge (1) according to any one of claims 1 to 7, wherein the cartridge (1) has a thermal conductivity of 0.1 to 400 W/mK, preferably 0.2 to 250 W/mK, particularly preferably 70 to 250 W/mk.

9. Method for generative production, in particular 3D printing, of dental prostheses comprising the step of pressing and hardening composite material from at least one cartridge (1) according to one of the claims 1 to 8 in such a way that a dental prosthesis part is formed.

10. A method according to claim 9, wherein the ratio of the viscosity of the composite material in the uncured state to the nozzle diameter is in the range of 0.033 to 40 Pa*s/µm, preferably 0.5 to 10.0 Pa*s/µm, more preferably 0.8 to 5.0 Pa*s/µm.

11. Use of a cartridge (1) according to one of claims 1 to 8 for the generative production of dental prostheses, in particular by means of 3D printing processes.

12. Kit-of-parts comprising
a. a cartridge (1) according to any one of claims 1 to 8, in particular a plurality of cartridges (1) according to any one of claims 1 to 8 with different composite materials, wherein individual ones of the plurality of composites differ in color and/or translucency and/or with respect to the filler composition;
b. optionally: a support material, the support material being configured to
i) is substantially oxygen-impermeable; or is substantially transparent to electromagnetic radiation in the wavelength range of 100 to 1000 nm, preferably 200 to 800 nm, particularly preferably 300 to 500 nm;
ii) is especially biocompatible,
in particular a plurality of support materials, wherein individual ones of the plurality of support materials differ in the transmissive wavelength ranges and/or viscosity,
c. Application instructions for the fabrication of dental restorations.

## Revendications

1. Cartouche (1) contenant un matériau composite dentaire pour une imprimante 3D, la cartouche (1) ayant une buse ou étant configurée pour former une buse prédéfinie, dans laquelle la buse comprend une partie d'extrémité cylindrique ayant une longueur de 1 à 30 fois le diamètre intérieur de la buse à la sortie, et dans laquelle le matériau composite comprend
a. une matrice durcissable, en particulier photodurcissable,
b. uniquement des charges dont la taille maximale des particules est < 5 µm,
dans lequel le matériau composite dentaire à l'état non polymérisé à 23°C a une viscosité dans la gamme de 1 à 10 000 Pa*s, de préférence de 10 à 2000 Pa*s, plus préférablement de 50 à 800 Pa*s.

2. Cartouche (1) selon la revendication 1, dans laquelle le rapport de taille entre le diamètre de la buse de la cartouche (1) et la plus grande taille de particule du matériau composite est de 10:1, de préférence 30:1, plus préférablement 50:1.

3. Cartouche (1) selon la revendication 1 ou 2, comprenant un piston (10) pour déplacer le matériau composite à travers la buse hors de la cartouche (1).

4. Cartouche (1) selon l'une quelconque des revendications précédentes, dans laquelle un tamis est disposé dans la cartouche (1) en face de la sortie de la buse, tamis à travers lequel le matériau composite peut être passé lorsqu'il est expulsé de la cartouche (1).

5. Cartouche (1) selon l'une quelconque des revendications 1 à 4, dans laquelle la cartouche (1) est configurée de telle sorte qu'une buse peut être formée par découpe ou par perforation, notamment au moyen d'un laser.

6. Cartouche (1) selon l'une des revendications 1 à 5, comprenant au moins un élément d'étanchéité (9a, 9b, 9c), l'élément d'étanchéité étant conçu de telle sorte que la cartouche (1) peut être rendue étanche par rapport à un élément de presse (8) qui peut être disposé sur la cartouche (1) afin de déplacer le matériau composite.

7. Cartouche (1) selon la revendication 6, dans laquelle l'au moins un élément d'étanchéité (9a, 9b, 9c) est disposé dans une région extérieure de la cartouche (1) ou dans une région intérieure de la cartouche au-dessus de l'élément de pression (8) qui est adjacent à une région de réservoir (6), la région de réservoir (6) contenant le matériau composite.

8. Cartouche (1) selon l'une quelconque des revendications 1 à 7, dans laquelle la cartouche (1) a une conductivité thermique de 0,1 à 400 W/mK, de préférence de 0,2 à 250 W/mK, de manière particulièrement préférée de 70 à 250 W/mk.

9. Méthode de production générative, en particulier d'impression 3D, de prothèses dentaires comprenant l'étape de pressage et de durcissement d'un matériau composite provenant d'au moins une cartouche (1) selon l'une des revendications 1 à 8 de telle sorte qu'une prothèse dentaire soit formée.

10. Verfahren gemäss Anspruch 9, wobei das Verhältnis aus Viskosität des Kompositmaterials im unausgehärteten Zustand zum Düsendurchmesser im Bereich von 0.033 bis 40 Pa*s/µm, bevorzugt 0.5 bis 10.0 Pa*s/µm, besonders bevorzugt 0.8 bis 5.0 Pa*s/µm liegt.

11. Méthode selon la revendication 9, dans laquelle le rapport de la viscosité du matériau composite à l'état non durci au diamètre de la buse est dans la gamme de 0,033 à 40 Pa*s/µm, de préférence de 0,5 à 10,0 Pa*s/µm, plus préférablement de 0,8 à 5,0 Pa*s/µm.

12. Kit de pièces complet
a. cartouche (1) selon l'une quelconque des revendications 1 à 8, en particulier une pluralité de cartouches (1) selon l'une quelconque des revendications 1 à 8 avec différents matériaux composites, dans laquelle les composites individuels de la pluralité de composites se distinguent par leur couleur et/ou leur translucidité et/ou par la composition de la charge;
b. éventuellement : un matériau de support, dans lequel le matériau de support est configuré pour
i) est sensiblement imperméable à l'oxygène ; ou est sensiblement transparent au rayonnement électromagnétique dans la gamme de longueur d'onde de 100 à 1000 nm, de préférence de 200 à 800 nm, plus préférablement de 300 à 500 nm;
ii) est en particulier biocompatible,
en particulier une pluralité de matériaux de support, les matériaux individuels de la pluralité de matériaux de support différant dans les plages de longueurs d'onde de transmission et/ou la viscosité,
c. instructions d'application pour la fabrication de prothèses dentaires.
